# EUROPÄISCHE PATENTSCHRIFT

(11) **EP 0 890 619 B1**
(45) Veröffentlichungstag und Bekanntmachung des Hinweises auf die Patenterteilung: **27.10.2004**
(21) Anmeldenummer: 98112259.1
(22) Anmeldetag: 02.07.1998
(51) Int. Cl.: C09D 7/12, C09D 11/02

(54) **Verwendung von Polyolefinwachsen**
Use of polyolefinwaxes
Utilisation de cires de polyoléfines

(30) Priorität: 11.07.1997 DE 19729836; 13.03.1998 DE 19810891
(43) Veröffentlichungstag der Anmeldung: 13.01.1999
(73) Patentinhaber: Clariant GmbH, 65929 Frankfurt am Main (DE)
(72) Erfinder: Herrmann, Hans-Friedrich, Dr., 64521 Gross-Gerau (DE); Hohner, Gerd, Dr., 86368 Gersthofen (DE)

(56) Entgegenhaltungen:
- EP-A- 0 321 851
- EP-A- 0 571 882
- EP-A- 0 602 509
- DATABASE WPI Week 9627 Derwent Publications Ltd., London, GB; AN 265520 XP002081066 "electric insulate composition coating " A & JP 08 111121 A (HITACHI CABLE) 30. April 1996

## Beschreibung

Die vorliegende Erfindung bezieht sich auf die Verwendung von Polyolefinwachsen, insbesondere von Ethylen- und Propylen-Homopolymer- und Copolymerwachsen, hergestellt unter Verwendung von Metallocen-Katalysatoren.

Polyolefinwachse haben Bedeutung für eine Vielzahl von Anwendungsgebieten. Steigendes Interesse findet die Anwendung als Zusatz in Druckfarben und Lacken. In Druckfarben erhöhen Wachse die Abrieb-, Scheuer- und Kratzfestigkeit von Druckerzeugnissen. In Lacken dienen Wachse - außer zur Verbesserung der mechanischen Eigenschaften der Lackoberfläche - zur Erzielung von Mattierungseffekten (vgl. Ullmann's Encyclopedia of Industrial Chemistry, Weinheim, Basel, Cambridge, New York, 5.ed., Vol. A 28, S. 103 ff). Für die Druckfarben- und Lackanwendung werden die Wachse in Form von Lösemitteldispersionen oder -pasten oder aber in fester mikronisierter Form eingesetzt. Die Mikronisierung geschieht entweder durch Mahlung auf geeigneten Mühlen oder durch Versprühung aus der Schmelze, jeweils gegebenenfalls mit anschließender Klassierung. Die erforderlichen durchschnittlichen Partikelgrößen liegen in der Regel unterhalb von 10 µm.

Für diese Anwendungen finden bisher Wachse aus verschiedenartigen Herstellungsverfahren Verwendung. Üblich ist - neben der radikalischen Polymerisation bei hohen Drucken und Temperaturen - die Herstellung von Wachsen mit Ziegler-Natta-Katalysatoren mit einer Titan-Verbindung als katalytisch aktiver Spezies in Lösung (vgl. DE-A-1520914, US 3951935, US 4039560, EP-A- 584586).

Die Uneinheitlichkeit der Produkte ist erkennbar an einer breiten Verteilung der Kettenlängen, d.h. derpolydispersität, aus der Ungleichförmigkeit des Einbaus von Comonomeren innerhalb einer Kette und der Verteilung des Comonomer-Gehalts zwischen verschiedenartigen Ketten. Dies führt zu Produkten verminderter Härte und leichtflüchtigen oder extrahierbaren Anteilen.

Die Aufgabe der vorliegenden Erfindung liegt darin, verbesserte Polyolefinwachse zur Ausrüstung von Lacken und Druckfarben zu finden.

Die Aufgabe wird gelöst durch Verwendung von Polyolefinwachsen, welche durch Olefinpolymerisation unter Einsatz von Metallocen-Katalysatorsystemen hergestellt werden.

Es wurde festgestellt, daß insbesondere die Verwendung von Metallocen-Katalysatorsystemen bei der Herstellung von Polyolefinwachsen zu Materialien führt, die beim Einsatz in Druckfarben und Lacken verbesserte Scheuerschutz- bzw. Mattierungseffekte bewirken.

Es wurde weiterhin festgestellt, daß Polyolefinwachse hergestellt mit Metallocenen durch den gleichmäßigen Aufbau innerhalb der Polymerkette auch gegenüber gleichfalls engverteilten Wachsen hergestellt mit Ziegler-Natta-Katalysatoren vorteilhaft sind.

Mögliche Verfahren zur Herstellung der erfindungsgemäßen Polyolefinwachse sind in EP-A-571 882 und EP-A-602 509 beschrieben. Prinzipiell sind jedoch auch andere Verfahren, wie Lösungs-, Suspensions-, Gasphase- oder Masseverfahren geeignet, welche den Einsatz von Metallocen- oder anderer Einzentren-Katalysatorsysteme auf Basis von Titan-, Nickel-, Palladium- oder Vanadinverbindungen ermöglichen.

Die Aufgabe wird mittels Metallocenkatalysatoren hergestellten Polyolefinen und Polyolefinwachsen, die zur Herstellung von Druckfarben, Lacken, Schmelzklebern und Fototonern verwendet werden, gelöst.

Gegenstand der Erfindung ist die Verwendung von mit Metallocenkatalysatoren hergestellten Ethylenhomo- und - copolymerwachsen mit einer Molekulargewichtsverteilung Mw/Mn < 5 und einer Schmelzviskosität von 5 bis 100000 mPa.s gemessen bei 140°C als Additivkomponente zur Herstellung von Druckfarben und Lacken, wobei die Homopolymerwachse einen Schmelzpunkt von 123 °C bis 70 °C und die Copolymerwachse einen Schmelzpunkt von 106 °C bis 70 °C aufweisen.

Gegenstand der Erfindung ist auch die Verwendung von mit Metallocenkatalysatoren hergestellten Propylenhomound copolymerwachsen mit einer Molekulargewichtsverteilung Mw/Mn < 5, einer Schmelzviskosität von 5 bis 100000 mPas gemessen bei 170 °C und einem Schmelzpunkt von 165 bis 70 °C als Additivkomponente zur Herstellung von Druckfarben und Lacken.

Das Metallocen ist eine Verbindung der Formel I

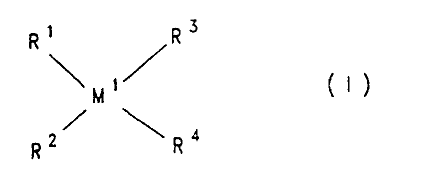

Diese Formel umfaßt auch Verbindungen der Formel Ia 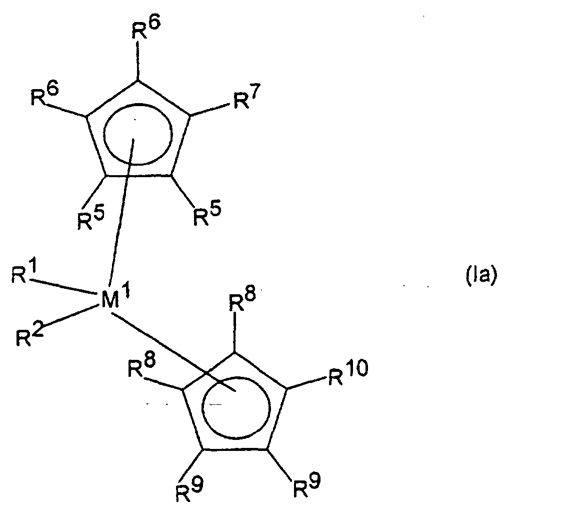 der Formel Ib 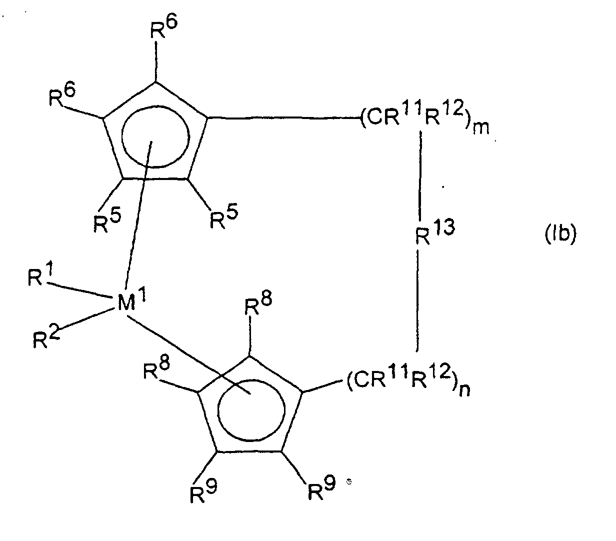 und der Formel Ic

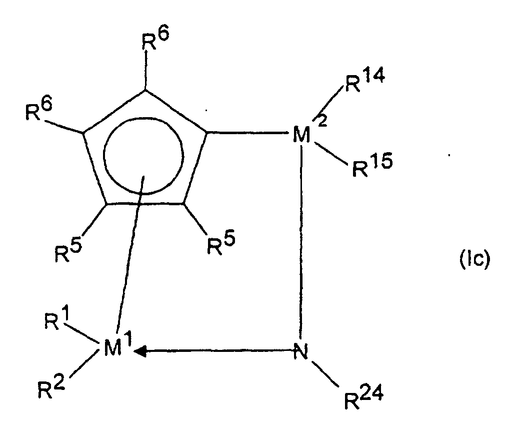

In den Formeln I, Ia, Ib und Ic ist M¹ ein Metall der Gruppe IVb, Vb oder VIb des Periodensystems, beispielsweise Titan, Zirkon, Hafnium, Vanadium, Niob, Tantal, Chrom, Molybdän, Wolfram, vorzugsweise Titan, Zirkon und Hafnium.

R¹ und R² sind gleich oder verschieden und bedeuten ein Wasserstoffatom, eine C₁-C₁₀-, vorzugsweise C₁-C₃-Alkylgruppe, eine C₁-C₁₀-, vorzugsweise C₁-C₃-Alkoxygruppe, eine C₆-C₁₀-, vorzugsweise C₆-C₈-Arylgruppe, eine C₆-C₁₀-, vorzugsweise C₆-C₈-Aryloxygruppe, eine C₂-C₁₀-, vorzugsweise C₂-C₄-Alkenylgruppe, eine C₇-C₄₀-, vorzugsweise C₇-C₁₀-Arylalkylgruppe, eine C₇-C₄₀-, vorzugsweise C₇-C₁₂-Alkylarylgruppe, eine C₈-C₄₀-, vorzugsweise C₈-C₁₂-Arylalkenylgruppe oder ein Halogenatom, vorzugsweise Chlor oder Methyl.

R³ und R⁴ sind gleich oder verschieden und bedeuten einen ein- oder mehrkernigen Kohlenwasserstoffrest, welcher mit dem Zentralatom M¹ eine Sandwichstruktur bilden kann. Bevorzugt sind R³ und R⁴ Cyclopentadienyl, Indenyl, Benzoindenyl oder Fluorenyl, wobei die Grundkörper noch zusätzliche Substituenten tragen oder miteinander verbrückt sein können. Außerdem kann einer der Reste R³ und R⁴ ein substituiertes Stickstoffatom sein, wobei R²⁴ die Bedeutung von R¹⁷ hat und vorzugsweise Methyl, t-Butyl oder Cyclohexyl ist.

R⁵, R⁶, R⁷, R⁸, R⁹ und R¹⁰ sind gleich oder verschieden und bedeuten ein Wasserstoffatom, ein Halogenatom, vorzugsweise ein Fluor-, Chlor- oder Bromatom, eine C₁-C₁₀-, vorzugsweise C₁-C₄-Alkylgruppe, eine C₆-C₁₀, vorzugsweise C₆-C₈-Arylgruppe, eine C₁-C₁₀-, vorzugsweise C₁-C₃-Alkoxygruppe, einen -NR¹⁶₂-, - SR¹⁶-, -OSiR¹⁶₃-, -SiR¹⁶₃₋ oder -PR¹⁶₂ -Rest, worin R¹⁶ eine C₁-C₁₀-, vorzugsweise C₁-C₃-Alkylgruppe oder C₆-C₁₀-, vorzugsweise C₆-C₈-Arylgruppe, oder im Falle Si oder P enthaltender Reste auch ein Halogenatom, vorzugsweise Chloratom, ist, oder je zwei benachbarte Reste R⁵, R⁶, R⁷, R⁸, R⁹ oder R¹⁰ bilden mit den sie verbindenden C-Atomen einen Ring. Besonders bevorzugte Liganden sind die substituierten Verbindungen der Grundkörper Indenyl, Benzoindenyl, Fluorenyl und Cyclopentadienyl.

R¹³ ist 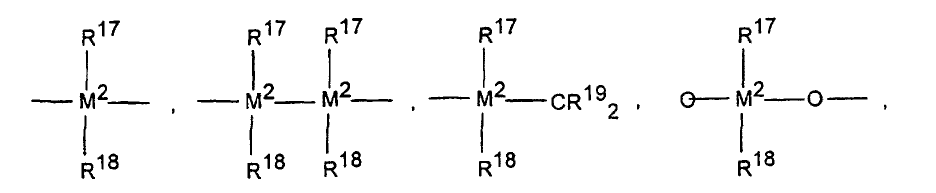 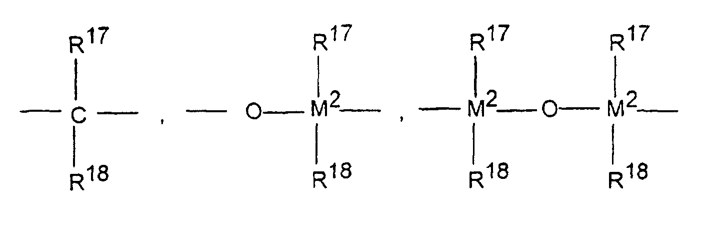 =BR¹⁷, =AIR¹⁷, -Ge-, -Sn-, -O-, -S-, =SO, =SO₂, =NR¹⁵, =CO, =PR¹⁵ oder
=P(O)R¹⁵, wobei R¹⁷, R¹⁸ und R¹⁹ gleich oder verschieden sind und ein Wasserstoffatom, ein Halogenatom, eine C₁-C₃₀-, vorzugsweise C₁-C₄-Alkylgruppe, insbesondere Methylgruppe, eine C₁-C₁₀-Fluoralkylgruppe, vorzugsweise CF₃-Gruppe, eine C₆-C₁₀-Fluorarylgruppe, vorzugsweise Pentafluorphenylgruppe, eine C₆-C₁₀-, vorzugsweise C₆-C₈-Arylgruppe, eine C₁-C₁₀-, vorzugsweise C₁-C₄-Alkoxygruppe, insbesondere Methoxygruppe, eine C₂-C₁₀-, vorzugsweise C₂-C₄-Alkenylgruppe, eine C₇-C₄₀-, vorzugsweise C₇-C₁₀-Arylalkylgruppe, eine C₈-C₄₀-, vorzugsweise C₈-C₁₂-Arylalkenylgruppe oder eine C₇-C₄₀-, vorzugsweise C₇-C₁₂-Alkylarylgruppe bedeuten, oder R¹⁷ und R¹⁸ oder R¹⁷ und R¹⁹ bilden jeweils zusammen mit den sie verbindenden Atomen einen Ring.

M² ist Silizium, Germanium oder Zinn, bevorzugt Silizium und Germanium. R¹³ ist vorzugsweise =CR¹⁷R¹⁸, =SiR¹⁷R¹⁸, =GeR¹⁷R¹⁸, -O-, -S-, =SO, =PR¹⁷ oder =P(O)R¹⁷.

R¹¹ und R¹² sind gleich oder verschieden und haben die für R¹⁷ genannte Bedeutung. m und n sind gleich oder verschieden und bedeuten null, 1 oder 2, bevorzugt null oder 1, wobei m plus n null, 1 oder 2, bevorzugt null oder 1 ist.

R¹⁴ und R¹⁵ haben die Bedeutung von R¹⁷ und R¹⁸.

Beispiele für geeignete Metallocene sind:
Bis(1,2,3-trimethylcyclopentadienyl)zirkoniumdichlorid,
Bis(1,2,4-trimethylcyclopentadienyl)zirkoniumdichlorid,
Bis(1,2-dimethylcyclopentadienyl)zirkoniumdichlorid,
Bis(1,3-dimethylcyclopentadienyl)zirkoniumdichlorid,
Bis(1-methylindenyl)zirkoniumdichlorid,
Bis(1-n-butyl-3-methyl-cyclopentadienyl)zirkoniumdichlorid,
Bis(2-methyl-4,6-di-i.propyl-indenyl)zirkoniumdichlorid,
Bis(2-methylindenyl)zirkoniumdichlorid,
Bis(4-methylindenyl)zirkoniumdichlorid,
Bis(5-methylindenyl)zirkoniumdichlorid,
Bis(alkylcyclopentadienyl)zirkoniumdichlorid,
Bis(alkylindenyl)zirkoniumdichlorid,
Bis(cyclopentadienyl)zirkoniumdichlorid,
Bis(indenyl)zirkoniumdichlorid,
Bis(methylcyclopentadienyl)zirkoniumdichlorid,
Bis(n-butylcyclopentadienyl)zirkoniumdichlorid,
Bis(octadecylcyclopentadienyl)zirkoniumdichlorid,
Bis(pentamethylcyclopentadienyl)zirkoniumdichlorid,
Bis(trimethylsilylcyclopentadienyl)zirkoniumdichlorid,
Biscyclopentadienylzirkoniumdibenzyl,
Biscyclopentadienylzirkoniumdimethyl,
Bistetrahydroindenylzirkoniumdichlorid,
Dimethylsilyl-9-fluorenylcyclopentadienylzirkoniumdichlorid,
Dimethylsilyl-bis-1-(2,3,5-trimethylcyclopentadienyl)zirkoniumdichlorid,
Dimethylsilyl-bis-1-(2,4-dimethyl-cyclopentadienyl)zirkoniumdichlorid,
Dimethylsilyl-bis-1-(2-methyl-4,5-benzoindenyl)zirkoniumdichlorid,
Dimethylsilyl-bis-1-(2-methyl-4-ethylindenyl)zirkoniumdichlorid,
Dimethylsilyl-bis-1-(2-methyl-4-i-propylindenyl)zirkoniumdichlorid,
Dimethylsilyl-bis-1-(2-methyl-4-phenylindenyl)zirkoniumdichlorid,
Dimethylsilyl-bis-1-(2-methyl-indenyl)zirkoniumdichlorid,
Dimethylsilyl-bis-1-(2-methyltetrahydroindenyl)zirkoniumdichlorid,
Dimethylsilyl-bis-1-indenylzirkoniumdichlorid,
Dimethylsilyl-bis-1-indenylzirkoniumdimethyl,
Dimethylsilyl-bis-1-tetrahydroindenylzirkoniumdichlorid,
Diphenylmethylen-9-fluorenylcyclopentadienylzirkoniumdichlorid,
Diphenylsilyl-bis-1-indenylzirkoniumdichlorid,
Ethylen-bis-1-(2-methyl-4,5-benzoindenyl)zirkoniumdichlorid,
Ethylen-bis-1-(2-methyl-4-phenylindenyl)zirkoniumdichlorid,
Ethylen-bis-1-(2-methyl-tetrahydroindenyl)zirkoniumdichlorid,
Ethylen-bis-1-(4,7-dimethyl-indenyl)zirkoniumdichlorid,
Ethylen-bis-1-indenylzirkoniumdichlorid,
Ethylen-bis-1-tetrahydroindenylzirkoniumdichlorid,
Indenyl-cyclopentadienyl-zirkoniumdichlorid
Isopropyliden(1-indenyl)(cyclopentadienyl)zirkoniumdichlorid,
Isopropyliden(9-fluorenyl)(cyclopentadienyl)zirkoniumdichlorid,
Phenylmethylsilyl-bis-1-(2-methyl-indenyl)zirkoniumdichlorid,
sowie jeweils die Alkyl- oder Aryl-Derivate dieser Metallocendichloride.

Zur Aktivierung der Einzentren-Katalysatorsysteme werden geeignete Cokatalysatoren eingesetzt. Geeignete Cokatalysatoren für Metallocene der Formel I sind aluminiumorganische Verbindungen, insbesondere Alumoxane oder auch aluminiumfreie Systeme wie R²²ₓNH₄₋ₓBR²³₄, R²²ₓPH₄₋ₓBR²³₄, R²²₃CBR²³₄ oder BR²³₃. In diesen Formeln bedeutet x eine Zahl von 1 bis 4, die Reste R²² sind gleich oder verschieden, bevorzugt gleich, und bedeuten C₁-C₁₀-Alkyl oder C₆-C₁₈-Aryl oder zwei Reste R²² bilden zusammen mit dem sie verbindenden Atom einen Ring, und die Reste R²³ sind gleich oder verschieden, bevorzugt gleich, und stehen für C₆-C₁₈-Aryl, das durch Alkyl, Haloalkyl oder Fluor substituiert sein kann. Insbesondere steht R²² für Ethyl, Propyl, Butyl oder Phenyl und R²³ für Phenyl, Pentafluorphenyl, 3,5-Bis-trifluormethylphenyl, Mesityl, Xylyl oder Tolyl.

Diese Cokatalysatoren sind insbesondere geeignet in Kombination mit Metallocenen der Formel I, wenn R¹ und R² eine C₁-C₁₀-Alkylgruppe oder eine Aryl- oder Benzylgruppe, vorzugsweise Methylgruppe, bedeuten. Die Derivatisierung zu den Metallocenen der Formel I kann nach literaturbekannten Methoden, beispielsweise durch Umsetzung mit Alkylierungsmitteln wie Methyllithium erfolgen (vgl. Organometallics **9** (1990) 1539; J. Am. Chem. Soc. **95** (1973) 6263).

Zusätzlich ist häufig eine dritte Komponente erforderlich, um einen Schutz von polaren Katalysator-Giften aufrecht zuerhalten. Hierzu sind aluminiumorganische Verbindung wie z.B. Triethylaluminium, Tributylaluminium und andere sowie Mischungen geeignet.

Je nach Verfahren können auch geträgerte Einzentren-Katalysatoren zur Verwendung kommen. Bevorzugt sind Katalysatorsysteme, bei welchen die Restgehalte von Trägermaterial und Cokatalysator eine Konzentration von 100 ppm im Produkt nicht überschreiten.

Zur Herstellung der erfindungsgemäßen Polyolefinwachse werden Homopolymerisationen, Copolymerisationen oder Terpolymerisationen von Olefinen oder Diolefinen mit 2 bis 18 C-Atomen durchgeführt. Beispiele für verwendbare Olefine sind Ethylen, Propylen, 1-Buten, 1-Penten, 1-Hexen, 1-Octen, 2-Methyl-1-propen, 3-Methyl-1-buten, 3-Methyl-1-penten, 4-Methyl-1-penten, 4-Methyl-1-hexen, Styrol oder cyclischen Olefine wie Cyclopenten, Cyclohexen, Norbornen, 1,4,5,8-Dimethano-1,2,3,4,4a,5,8,8a-octahydronaphthalin und deren strukturellen Abkömmlingen sowie Diolefine wie 1,5-Hexadien, 1,7-Octadien, 1,3- oder 1,5-Cyclooctadien. Bevorzugt ist die Polymerisation von Ethylen oder Propylen sowie die Copolymerisation von Ethylen oder Propylen mit einem Olefin mit 2 bis 10 Kohlenstoffatomen. Beispiele für Copolymerwachse sind Ethylen/Propylen-, Ethylen/1-Buten-, Ethylen/1-Hexen-, Ethylen/Norbornen und Propylen/Ethylen, Propylen/1-Buten-Wachse.

Beispiele für Terpolymere sind Ethylen/Propylen/1-Buten- oder Ethylen/Propylen/1,5-Hexadien-Terpolymerwachse.

Copolymerwachse enthalten 0 bis 20 Gew% des Comonomers bezogen auf das Gesamtpolymer. Terpolymerwachse enthalten mindestens 80 Gew-% des Hauptmonomers, wobei die beiden Comonomere jeweils bis zu 19 Gew-%, in Summe beider Comonomere jedoch maximal 20 Gew% am Gesamtpolymer enthalten sind.

Die nachstehend aufgeführten Polyolefinwachse eignen sich insbesondere für die genannten Verwendungen:

Polyethylenwachse, hergestellt unter Verwendung von Metallocen-Verbindungen, mit einer engen Molekulargewichtsverteilung Mw/Mn < 5, bevorzugt < 3, einer Schmelzviskosität von 5 bis 100000 mPas gemessen bei 140°C und einen Schmelzpunkt von 137° bis 70°C.

Polypropylenwachse, hergestellt unter Verwendung von Metallocen-Verbindungen, mit einer engen Molekulargewichtsverteilung Mw/Mn < 5, bevorzugt < 3, einer Schmelzviskosität von 5 bis 100000 mPas gemessen bei 170°C und einen Schmelzpunkt von 165° bis 70°C.

Dabei bedeuten:

| | |
|---|---|
| Mw = | Molmassengewichtsmittel in g/mol nach GPC |
| Mv = | Molmassenzahlenmittel in g/mol nach GPC |
| Mw/Mn = | Polydispersität |
| GPC = | Gel-Permeations-Chromatographie |

### Beispiel 1:

Zur Herstellung des Katalysators werden 18 mg Bis(cyclopentylcyclopentadienyl)zirkoniumdichlorid in 10 cm³ 10 Gew-% toluolischer Methylaluminoxan-Lösung gelöst und durch 15 minütiges Stehenlassen voraktiviert. Parallel hierzu wird ein trockener mit Stickstoff gespülter 16 dm³-Kessel mit 4 kg Propan gefüllt und bei 30°C 1,0 bar Wasserstoff sowie 4,5 bar Ethylen zudosiert. Der Reaktor wird auf 70°C aufgeheizt und bei 100 Upm gerührt. Nach 20 min wird die Polymerisation bei 250 Upm durch Zugabe des Katalysators über die Druckschleuse gestartet. Die Polymerisationstemperatur wird durch Kühlen auf 70°C geregelt und die Gasraumzusammensetzung durch Nachdosieren der Komponenten konstant gehalten. Nach 1 h Polymerisationszeit wird durch Zugabe von Isopropanol gestoppt und der Reaktor entspannt und geöffnet. Nach Vacuumtrocknung des Produkts werden 1,9 kg Polyethylen-Wachs mit einer VZ (Viskositätszahl) von 16 cm³/g erhalten. Das DSC (Differential Scanning Calorimetry) ergibt einen Schmelzpunkt von 123°C und eine Schmelzenthalpie von 254 [J/g]. Weitere Kenndaten in Tabelle 1.

### Beispiel 2:

Zur Herstellung des Katalysators werden 8 mg rac-Ethylen-bis-tetrahydroindenylzirkondichlorid in 5 cm³ 10 Gew% toluolischer Methylaluminoxan-Lösung verwendet. Der Reaktor aus Beispiel 1 wird mit 1 kg Propan sowie 2,5 kg Propen gefüllt und bei 30°C 1,2 bar Wasserstoff zudosiert. Es wird polymerisiert wie im Beispiel 1. Nach Vacuumtrocknung des Produkts werden 1,60 kg Polypropylen-Wachs mit einer VZ von 6,7 cm³/g erhalten. Das DSC ergibt einen Schmelzpunkt von 124°C und eine Schmelzenthalpie von 92 [J/g]. Weitere Kenndaten in Tabelle 1.

### Beispiel 3:

Zur Herstellung des Katalysators werden 27 mg Bis-n-butylcydopentadienylzirkondichlorid in 5 cm³ 10 Gew-% toluolischer Methylaluminoxan-Lösung verwendet. Der Reaktor aus Beispiel 1 wird mit 3 kg Propan sowie 0,7 kg Propen gefüllt und bei 30°C 0,5 bar Wasserstoff sowie 7 bar Ethylen zudosiert. Es wird Polymerisiert wie im Beispiel 1. Nach Vacuumtrocknung des Produkts werden 1,5 kg Ethylen/Propylen-Copolymerwachs mit einer VZ von 19 cm³/g erhalten. Das DSC ergibt einen Schmelzpunkt von 106°C und eine Schmelzenthalpie von 123 [J/g]. Weitere Kenndaten in Tabelle 1.

### Beispiel 4:

Zur Herstellung des Katalysators werden 1,5 mg rac-Dimethylsilyl-bis-(2-methyl-4,5-benzoindenyl)zirkoniumdichlorid in 5 cm³ 10 Gew-% toluolischer Methylaluminoxan-Lösung verwendet. Der Reaktor aus Beispiel 1 wird mit 1 kg Propan sowie 3 kg Propen gefüllt und bei 30°C 1,6 bar Wasserstoff und 1,6 bar Ethylen zudosiert. Es wird Polymerisiert wie im Beispiel 1. Nach Vacuumtrocknung des Produkts werden 1,90 kg Propylen/Ethylen-Copolymerwachs mit einer VZ von 31 cm³/g erhalten. Das DSC ergibt einen Schmelzpunkt von 118°C und eine Schmelzenthalpie von 82 [J/g]. Weitere Kenndaten in Tabelle 1.

Die nach den Beispielen 1-4 hergestellten Wachse wurden in Druck- bzw. Lackfarben-Rezepturen im Vergleich mit käuflichen, nach dem Ziegler-Natta-Verfahren synthetisierten Wachsen geprüft.

**Tabelle 1**

| Physikalische Eigenschaften der getesteten Wachse: | | | | | | |
|---|---|---|---|---|---|---|
| | Typ | Schmelzviskosität mPa.s | Tropfpunkt °C | Mw/Mn | Mn g/mol | Dichte g/cm ³ |
| Prüfmuster 1, aus Bp. 1 | Metallocen Ethylen-Homopolymer Wachs, | 350 bei 140°C | 124 | 2,4 | 990 | 0.965 |
| Prüfmuster 2, aus Bp. 2 | Metallocen Propen-Homopolymer Wachs, | 40 bei 170°C | 135 | 2,1 | 1870 | 0.880 |
| Prüfmuster 3, aus Bp. 3 | Metallocen Ethylen-Propen-Copolymer Wachs, | 640 bei 140°C | 107 | 2,5 | 2220 | 0.928 |
| Prüfmuster 4, aus Bp. 4 | Metallocen Propen-Ethylen-Copolymer Wachs, | 1490 bei 170°C | 127 | 2,4 | 7071 | 0.871 |
| Vergleichsmuster 1 | Ethylen-Homopolymerwachs, hergestellt mit Ziegler-Natta-Katalsator. | 300 bei 140°C | 125 | 2,8 | 1500 | 0.970 |
| Vergleichsmuster 2 | Ethylen/Propen-Copolymerwachs, hergestellt mit Ziegler-Natta-Katalysator. | 630 bei 140°C | 119 | 2,8 | 2500 | 0.930 |

### Beispiel 5, 6 und Vergleichsbeispiel 1:

Die Prüfmuster 1 und 2 sowie Vergleichsmuster 1 wurden jeweils durch Zerkleinerung auf einer Luftstrahlmühle (Chrispro-Jetmill MC 100, Micro-Macinazione SA) mikronisiert. Die Mikropulver wurden zu 1.5 Gew-% unter intensivem Rühren mit einem Dissolver in eine Offsetfarbe (Novaboard cyan 4 C 86, K+E Druckfarben) eingearbeitet. Man fertigte einen Probedruck (Prüfbau-Mehrzweck-Probedruckmaschine System Dr. Dürner) auf Papier des Typs Phoenomatt 115 g/m2 (Scheufelen GmbH+Co KG) an und untersuchte das Scheuerverhalten auf einem Scheuerprüf-Gerät (Scheuerprüfer Prüfbau Quartant) bei einer Scheuerbelastung von 48 g/cm2, Scheuergeschwindigkeit 15 cm/sec. Beurteilt wurde die Intensität der auf das Prüfblatt übertragenen Farbe (Farbdifferenz nach DIN 6174, Messung mit Hunterlab D 25-2, Hunter).

**Tabelle 2**

| Ergebnis der Prüfung in einer Offset-Farbe bei Einarbeitung als Mikropulver | | | | |
|---|---|---|---|---|
| | | Partikel-größe d₅₀[µm] | Farbdifferenz | |
| | | | 100 Hub | 200 Hub |
| | Vergleich ohne Wachs | - | 14.4 | 15.9 |
| Beispiel 5 | Prüfmuster 1 | 5.6 | 1.5 | 1.8 |
| Beispiel 6 | Prüfmuster 2 | 6.3 | 1.1 | 1.9 |
| Vergleichsbeispiel 1 | Vergleichsmuster 1 | 8.3 | 2.2 | 2.7 |

Die erfindungsgemäßen Wachse ergeben ein feineres Pulver und bewirken eine geringere Farbdifferenz und damit eine verbesserte Abriebfestigkeit.

### Beispiel 7 und Vergleichsbeispiel 2:

10 Teile Prüfmuster 2 und Vergleichsmuster 1 wurden jeweils in 30 Teilen Toluol unter Rühren auf 100°C erhitzt. Die gebildete klare Lösung wurde auf eine Temperatur 3° oberhalb des Trübungspunktes abgekühlt und in 60 Teile kaltes Toluol eingerührt. Man ließ das Gemisch unter fortgesetztem Rühren auf Raumtemperatur abkühlen. Die entstandene Dispersion wurde zu 1.0 Gew-% in eine Illustrationstiefdruckfarbe (Typ RR Grav rot, Siegwerk Farbenfabrik Keller, Dr. Rung + Co) eingearbeitet. Es wurde ein Probedruck (Tiefdruck-Probedruckgerät LTG 20, Einlehner Prüfmaschinenbau) auf Papier des Typs Allgäu 60 g/qm (G.Haindl'sche Papierfabriken KG) angefertigt und entsprechend Beispiel 5 geprüft.

**Tabelle 3**

| Ergebnis der Prüfung in einer Tiefdruckfarbe, Einarbeitung als Dispersion | | | | | |
|---|---|---|---|---|---|
| | | Farbdifferenz nach 20 Hub | | Farbdifferenz nach 100 Hub | |
| | | Vollton | Halbton | Vollton | Halbton |
| | Vergleich ohne Wachs | 7 | 6.5 | 12.9 | 13.6 |
| Beispiel 7 | Prüfmuster 2 | 2.3 | 1.2 | 4.0 | 2.9 |
| Vergleichsbeispiel 2 | Vergleichsmuster 1 | 3.0 | 2.0 | 4.4 | 3.5 |

Die erfindungsgemäßen Wachse bewirken eine geringere Farbdifferenz und damit eine verbesserte Abriebfestigkeit.

### Beispiel 8 und Vergleichsbeispiel 3:

33 Teile Prüfmuster 3 und Vergleichsmuster 2 wurden jeweils in 67 Teilen Mineralöl PKWF 6/9 (Haltermann N.V.) bei 135°C unter Rühren gelöst. Die Lösung wurde auf einem Dreiwalzenstuhl zur Paste verarbeitet. Die Paste wurde zu 1.5 Gew-% in eine Offset-Farbe (Novaboard Cyan 4 C 86 wachsfrei; K+E Druckfarben GmbH+CO KG) eingearbeitet und entsprechend Beispiel 5 geprüft.

**Tabelle 4**

| Ergebnis der Prüfung in einer Offset-Farbe, Einarbeitung als Paste | | | |
|---|---|---|---|
| | | Farbdifferenz | |
| | | nach 100 Hub | nach 200 Hub |
| | Vergleich ohne Wachs | 10.8 | 16.8 |
| Beispiel 8 | Prüfmuster 3 | 2.6 | 3.5 |
| Vergleichsbeispiel 3 | Vergleichsmuster 2 | 3.5 | 4.7 |

### Beispiel 9 und Vergleichsbeispiel 4:

Das Prüfmuster 1 und Vergleichsmuster 1 wurden jeweils analog zu Beispiel 7 geprüft.

**Tabelle 5**

| Ergebnis der Prüfung in einer Tiefdruckfarbe, Einarbeitung als Dispersion | | | |
|---|---|---|---|
| | | Farbdifferenz nach 20 Hub | |
| | | Vollton | Halbton |
| | Vergleich ohne Wachs | 7 | 6.5 |
| Beispiel 9 | Prüfmuster 3 | 1.3 | 0.9 |
| Vergleichsbeispiel 4 | Vergleichsmuster 2 | 1.4 | 1.3 |

### Beispiel 10 und Vergleichsbeispiel 5:

Das Prüfmuster 4 und Vergleichsmuster 2 wurden jeweils analog zu Beispiel 7 geprüft.

**Tabelle 6**

| Ergebnis der Prüfung in einer Tiefdruck-Farbe, Einarbeitung als Dispersion | | | |
|---|---|---|---|
| | | Farbdifferenz nach 20 Hub | |
| | | Vollton | Halbton |
| | Vergleich ohne Wachs | 7 | 6.5 |
| Beispiel 10 | Prüfmuster 4 | 1.1 | 0.8 |
| Vergleichsbeispiel 5 | Vergleichsmuster 2 | 1.4 | 1.3 |

### Beispiele 11, 12 und Vergleichsbeispiel 6:

Die in den Beispielen 5 und 6 angegeben mikronisierten Wachse wurden unter Verwendung eines Dissolvers in einen Nitrocellulose-Standard-Lack eingerührt. Der wachshaltige Lack wurde mittels einer Rakel auf eine Glasplatte aufgetragen (60 µm Naßfilmstärke). Die Beurteilung des Glanzgrades (Mattierungseffekts) erfolgte nach 24-stündiger Trocknung mit Hilfe eines Glanzmessgerätes Typ micro-TRI-gloss (Fa. BYK-Gardner).

**Tabelle 7**

| Prüfung von Ethylen- und Propen-Homopolymerwachsen in einer Lackrezeptur bei Einarbeitung als Mikropulver | | | |
|---|---|---|---|
| | | Glanz (Winkel 60°) | |
| | | Wachskonz. 2 Gew% | Wachskonz. 4 Gew% |
| | Vergleich ohne Wachs | 140 | 140 |
| Beispiel 11 | Prüfmuster 1 | 25 | 13 |
| Beispiel 12 | Prüfmuster 2 | 30 | 15 |
| Vergleichsbeispiel 6 | Vergleichsmuster 1 | 32 | 17 |

Die erfindungsgemäßen Wachse zeigen einen verminderten Oberflächenglanz und eine verbesserte Mattierungswirkung.

### Beispiele 13, 14 und Vergleichsbeispiel 7:

10 Teile Wachs wurden in 30 Teilen Xylol unter Rühren erhitzt. Die gebildete klare Lösung wurde auf eine Tempeartur 3° oberhalb des Trübungspunktes abgekühlt und unter Verwendung eines Dissolvers in 60 Teile kaltes Xylol eingerührt. Man ließ das Gemisch unter fortgesetztem intensivem Rühren auf Raumtemperatur abkühlen. 20 bzw. 40 Teile der 10%igen Wachsdispersion wurden in 80 bzw. 60 Teile eines Nitrocellulose-Standard-Lackes eingerührt. Die Prüfung des wachshaltigen Lacks erfolgte wie in Beispiel 11 beschrieben.

**Tabelle 8**

| Ergebnis der Prüfung von Copolymerwachsen in einer Lackrezeptur bei Einarbeitung als Dispersion | | | |
|---|---|---|---|
| | | Glanz (Winkel 60°) | |
| | | Wachskonz. 2 Gew% | Wachskonz. 4 Gew% |
| | Vergleich ohne Wachs | 143 | 143 |
| Beispiel 13 | Prüfmuster 3 | 15 | 4 |
| Beispiel 14 | Prüfmuster 4 | 16 | 7 |
| Vergleichsbeispiel 7 | Vergleichsmuster 2 | 18 | 9 |

### Beispiele 15, 16 und Vergleichsbeispiel 8:

2 bzw. 4 Teile des Prüfwachses wurden in 18 bzw. 16 Teilen heißem Xylol klar gelöst. Die Lösung wurde auf eine Temperatur 3° oberhalb des Trübungspunktes des Wachses abgekühlt und in 80 Teile Nitrocellulose-Standardlack eingerührt. Man ließ das Gemisch unter intensivem Rühren auf Raumtemperatur abkühlen. Der Lack wurde analog Beispiel 11 auf eine Glasplatte aufgetragen und der Glanzgrad gemessen.

**Tabelle 9**

| Ergebnis der Einarbeitung durch Heißfällung | | | |
|---|---|---|---|
| | | Glanz (Winkel 60°) | |
| | | Wachskonz. 2 Gew% | Wachskonz. 4 Gew% |
| | Vergleich ohne Wachs | 138 | 138 |
| Beispiel 15 | Prüfmuster 3 | 17 | 8 |
| Beispiel 16 | Prüfmuster 4 | 16 | 9 |
| Vergleichsbeispiel 8 | Vergleichsmuster 2 | 26 | 11 |

## Patentansprüche

1. Verwendung von mit Metallocenkatalysatoren hergestellten Ethylenhomo- und - copolymerwachsen mit einer Molekulargewichtsverteilung Mw/Mn < 5 und einer Schmelzviskosität von 5 bis 100000 mPa.s gemessen bei 140°C als Additivkomponente zur Herstellung von Druckfarben und Lacken, **dadurch gekennzeichnet, daß** die Homopolymerwachse einen Schmelzpunkt von 123 °C bis 70 °C und die Copolymerwachse einen Schmelzpunkt von 106 °C bis 70 °C aufweisen.

2. Verwendung von mit Metaltocenkatalysatoren hergestellten Propylenhomound copolymerwachsen mit einer Molekulargewichtsverteilung Mw/Mn < 5, einer Schmelzviskosität von 5 bis 100000 mPas gemessen bei 170 °C und einem Schmelzpunkt von 165 bis 70 °C als Additivkomponente zur Herstellung von Druckfarben und Lacken.

3. Verwendung von Polyethylen- und Polypropylenwachsen nach Anspruch 1 oder 2, **dadurch gekennzeichnet, dass** die Wachse in mikronisierter Form eingesetzt werden.

## Claims

1. The use of ethylene homopolymer and copolymer waxes prepared using metallocene catalysts and having a molecular weight distribution M_{w} /Mₙ, < 5 and a melt viscosity of from 5 to 100000 mPas measured at 140°C as additive components for producing printing inks and surface coatings, wherein the homopolymer waxes have a melting point of from 123°C to 70°C and the copolymer waxes have a melting point of from 106°C to 70°C.

2. The use of propylene homopolymer and copolymer waxes prepared using metallocene catalysts and having a molecular weight distribution M_{w}/Mₙ < 5, a melt viscosity of from 5 to 100000 mPas measured at 170°C and a melting point of from 165° to 70°C as additive components for producing printing inks and surface coatings.

3. The use of polyethylene and polypropylene waxes as claimed in claim 1 or 2, wherein the waxes are used in micronized form.

## Revendications

1. Utilisation de cires homopolymères et copolymères de l'éthylène préparées à l'aide de catalyseurs à base d'un métallocène, ayant une distribution des masses moléculaires M_{w}/Mₙ inférieure à 5 et une viscosité à l'état fondu de 5 à 100 000 mPa.s telle que mesurée à 140°C, en tant que composants additifs pour préparer des encres d'imprimerie et des peintures et vernis, **caractérisée en ce que** les cires homopolymères ont un point de fusion de 123 à 70°C et les cires copolymères ont un point de fusion de 106 à 70°C.

2. Utilisation de cires homopolymères et copolymères du propylène préparées à l'aide de catalyseurs à base d'un métallocène, ayant une distribution des masses moléculaires M_{w}/Mₙ inférieure à 5, une viscosité à l'état fondu de 5 à 100 000 mPa.s telle que mesurée à 170°C et un point de fusion de 165 à 70°C, en tant que composant additif pour la préparation d'encres d'imprimerie et de peintures et vernis.

3. Utilisation de cires de polyéthylène et de polypropylène selon la revendication 1 ou 2, **caractérisée en ce que** les cires sont utilisées sous forme micronisée.
